# EUROPEAN PATENT APPLICATION

(11) **EP 4 730 875 A1**
(43) Date of publication of application: **22.04.2026**
(21) Application number: 24836393.9
(22) Date of filing: 08.07.2024
(51) Int. Cl.: H04W 52/02, H04W 74/0833, H04W 48/10, H04W 48/20

(54) **METHOD AND DEVICE FOR INITIAL ACCESS SIGNALING FOR SUPPORTING SLEEP MODE CELL**

(30) Priority: 06.07.2023 KR 20230087956
(71) Applicant: Samsung Electronics Co., Ltd., Suwon-si, Gyeonggi-do 16677 (KR)
(72) Inventor: JUNG, Byounghoon, Suwon-si, Gyeonggi-do 16677 (KR); BAE, Beomsik, Suwon-si, Gyeonggi-do 16677 (KR); BAEK, Sangkyu, Suwon-si, Gyeonggi-do 16677 (KR); JUNG, Sangyeob, Suwon-si, Gyeonggi-do 16677 (KR)
(74) Representative: Nederlandsch Octrooibureau
(86) International application number: PCT/KR2024/009683
(87) International publication number: WO 2025/009946

(57) **Abstract**

An operating method of a user equipment (UE) in a wireless communication system according to an embodiment of the present disclosure may include: receiving configuration information for a power saving mode operation from a synchronization cell; determining state information of at least one data cell based on the configuration information; and identifying whether to access one of the at least one data cell based on the state information.

## Description

### Technical Field

The present disclosure relates to operations of a user equipment (UE) and a base station (BS) in a wireless communication system, and more particularly, to a method and device for an initial access procedure and signal transmission and reception of a UE for supporting a case where a transceiver of a BS or a cell enters a sleep mode in a network energy saving (NES) system supporting power saving technology.

### Background Art

A 5^{th} generation (5G) mobile communication technology defines a broad frequency band to enable a high data rate and new services, and may be implemented not only in a 'Sub 6 GHz' band including 3.5 GHz but also in an ultra-high frequency band ('Above 6 GHz') referred to as millimeter wave (mmWave) including 28 GHz, 39 GHz, and the like. Also, for 6^{th} generation (6G) mobile communication technology referred to as a system beyond 5G communication (beyond 5G), in order to achieve a data rate fifty times faster than the 5G mobile communication technology and ultra-low latency one-tenth of the 5G mobile communication technology, implementation of the 6G mobile communication technology in a terahertz band (e.g., 95 GHz to 3 THz band) is being considered.

In the early phase of the development of the 5G mobile communication technology, in order to support services and satisfy performance requirements of enhanced Mobile BroadBand (eMBB), Ultra Reliable Low Latency Communications (URLLC), and massive Machine-Type Communications (mMTC), there has been ongoing standardization about beamforming and massive multiple input multiple output (MIMO) for mitigating pathloss of radio waves and increasing transmission distances of radio waves in a mmWave band, supporting numerologies (e.g., operation of multiple subcarrier spacings) for efficiently utilizing mmWave resources and dynamic operation of slot formats, initial access technology for supporting multi-beam transmission and broadband, definition and operation of bandwidth part (BWP), new channel coding methods such as a low density parity check (LDPC) code for a large amount of data transmission and a polar code for highly reliable transmission of control information, L2 pre-processing, and network slicing for providing a dedicated network specialized to a specific service.

Currently, there are ongoing discussions about improvement and performance enhancement of initial 5G mobile communication technology in consideration of services to be supported by the 5G mobile communication technology, and there has been physical layer standardization of technologies such as vehicle-to-everything (V2X) for aiding driving determination by autonomous vehicles based on information regarding locations and states of vehicles transmitted by the vehicles and for enhancing user convenience, new radio unlicensed (NR-U) aimed at system operations following various regulation-related requirements in unlicensed bands, NR user equipment (NR UE) power saving, non-terrestrial network (NTN) that is UE-satellite direct communication for providing coverage in an area in which communication with terrestrial networks is unavailable, and positioning.

Moreover, there has been ongoing standardization of air interface architecture/protocol regarding technologies such as industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR), and standardization of system architecture/service regarding a 5G baseline architecture (e.g., service based architecture or service based interface) for combining network functions virtualization (NFV) and software-defined networking (SDN) technologies, and mobile edge computing (MEC) for receiving services based on UE locations.

When the 5G mobile communication system is commercialized, connected devices being on a rapidly increasing trend are being predicted to be connected to communication networks, and therefore, it is predicted that enhancement of functions and performance of the 5G mobile communication system and integrated operations of the connected devices are required. To this end, new researches are scheduled for eXtended Reality (XR) for efficiently supporting Augmented Reality (AR), Virtual Reality (VR), Mixed Reality (MR) and the like, 5G performance improvement and complexity reduction by utilizing artificial intelligence (AI) and machine learning (ML), Al service support, metaverse service support, drone communication, and the like.

Also, such development of the 5G mobile communication system will serve as a basis for developing not only new waveforms for providing coverage in terahertz bands of 6G mobile communication technology, multi-antenna transmission technologies such as full dimensional MIMO (FD-MIMO), array antennas and large-scale antennas, meta material-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of the 6G mobile communication technology and improving system networks, Al-based communication technology for implementing system optimization by utilizing satellites and Al from a design stage and internalizing end-to-end Al support functions, and next-generation distributed computing technology for implementing services at levels of complexity exceeding the limit of UE operation capability by utilizing ultra-high-performance communication and computing resources.

Methods and devices for supporting mobility using location information of a UE in a non-terrestrial network system have been proposed, and for a UE capable of using the methods and devices, there has been a growing need for a mobility support method using relative location measurement between the UE and a network, which is different from an existing signal strength-based method.

### Disclosure of Invention

### Technical Problem

The present disclosure provides a method and device for improving handover performance of a user equipment (UE) using network power saving mode operation information in a wireless communication system.

### Solution to Problem

An operating method of a user equipment (UE) in a wireless communication system according to an embodiment of the present disclosure may include: receiving configuration information for a power saving mode operation from a sync cell; determining state information of at least one data cell based on the configuration information; and identifying whether to access one of the at least one data cell based on the state information.

An operating method of a user equipment (UE) in a wireless communication system according to an embodiment of the present disclosure may include: obtaining, from a first cell, configuration information for a power saving mode operation of at least one neighboring cell; transmitting, based on the configuration information, a signal including a wake-up indication to at least one of the at least one neighboring cell; and performing random access (RA) to one of the neighboring cells to which the signal including the wake-up indication is transmitted.

According to an embodiment of the present disclosure, the configuration information may be included in an information block including a synchronization signal.

According to an embodiment of the present disclosure, the operating method of the UE in the wireless communication system may further include: receiving, from the first cell, an information block including a synchronization signal; and transmitting an access request to the first cell, wherein the configuration information is received in response to the access request.

The operating method of the UE in the wireless communication system according to an embodiment of the present disclosure may further include receiving a synchronization signal from at least one of the neighboring cells to which the signal including the wake-up indication is transmitted, wherein the performing of the random access includes performing random access to one of the neighboring cells transmitting the synchronization signal.

According to an embodiment of the present disclosure, the first cell may be a synchronization cell, and the at least one neighboring cell may be a data cell.

The operating method of the UE in the wireless communication system according to an embodiment of the present disclosure may further include selecting, based on the configuration information, a cell from among the at least one neighboring cell to which the signal including the wake-up indication is to be transmitted.

According to an embodiment of the present disclosure, the configuration information may include at least one of resource configuration information of a signal to be transmitted/received for the power saving mode operation, information about synchronization of the at least one neighboring cell, information about a location of the at least one neighboring cell, and information about a service supported by the at least one neighboring cell.

A user equipment (UE) operating in a wireless communication system according to an embodiment of the present disclosure may include: a transceiver; and at least one processor operatively coupled to the transceiver and configured to obtain, from a first cell, configuration information for a power saving mode operation of at least one neighboring cell, transmit, based on the configuration information, a signal including a wake-up indication to at least one of the at least one neighboring cell, and
perform random access (RA) to one of the neighboring cells to which the signal including the wake-up indication is transmitted.

A wireless communication system according to an embodiment of the present disclosure may include: a user equipment (UE); a first cell; and at least one neighboring cell, wherein the first cell obtains configuration information for a power saving mode operation from the at least one neighboring cell and transmits the configuration information for the power saving mode operation of the at least one neighboring cell to the UE, the UE transmits, based on the configuration information, a signal including a wake-up indication to at least one of the at least one neighboring cell, at least one of the at least one neighboring cell receiving the wake-up indication transmits a synchronization signal to the UE, and the UE performs random access to one of the neighboring cells transmitting the synchronization signal.

Technical objectives to be achieved by various embodiments of the present disclosure are not limited thereto, and other unmentioned technical objectives will be apparent to one of ordinary skill in the art from the description of the present disclosure.

### Advantageous Effects of Invention

According to an embodiment of the present disclosure, a user equipment (UE) may perform faster handover by effectively utilizing operation information in a power saving mode of a network in a wireless communication system.

However, technical effects of the present disclosure are not limited thereto, and other unmentioned technical effects will be apparent to one of ordinary skill in the art from the following description.

### Brief Description of Drawings

FIG. 1 is a diagram illustrating a structure of a new radio (NR) system, according to an embodiment of the present disclosure.
FIG. 2 is a diagram for describing a structure in which a base station (BS) or a cell and a user equipment (UE) support a wake up radio (WUR), according to an embodiment of the present disclosure.
FIG. 3 illustrates a procedure in which a UE transmits a wake up signal (WUS) to a BS and the BS receiving the WUS wakes up from a sleep mode, according to an embodiment of the present disclosure.
FIG. 4 illustrates a procedure in which a UE transmits a WUS based on configuration information configured by a BS and the BS receiving the WUS wakes up from a sleep mode, according to an embodiment of the present disclosure.
FIG. 5 is a flowchart illustrating a procedure in which a UE transmits a WUS to a plurality of BSs, the BSs receiving the WUS wake up from a sleep mode, and the UE performs cell selection and connection, according to an embodiment of the present disclosure.
FIG. 6 is a flowchart illustrating a procedure in which a UE transmits a WUS to a plurality of BSs, some of the BSs receiving the WUS wake up from a sleep mode, and the UE performs cell selection and connection, according to an embodiment of the present disclosure.
FIG. 7 illustrates an environment in which a synchronization cell and data cells coexist, according to an embodiment of the present disclosure.
FIG. 8 is a flowchart illustrating an example of an initial access procedure of a UE, according to an embodiment of the present disclosure.
FIG. 9 is a flowchart illustrating an example of an initial access process of a UE, according to an embodiment of the present disclosure.
FIG. 10 is a diagram illustrating a structure of a BS, according to an embodiment of the present disclosure.
FIG. 11 is a diagram illustrating a structure of a UE, according to an embodiment of the present disclosure.

### Mode for the Invention

**Hereinafter,** operation principles of the present disclosure will be described with reference to the accompanying drawings. While describing the present disclosure, detailed descriptions of related well-known functions or configurations that may blur the points of the present disclosure are omitted. The terms used herein are those defined in consideration of functions in the present disclosure, but the terms may vary according to the intention of users or operators, precedents, etc. Hence, the terms used herein should be defined based on the meaning of the terms together with the descriptions throughout the specification.

Hereinafter, terms for identifying access nodes, terms indicating network entities, terms indicating messages, terms indicating interfaces between network entities, and terms indicating various identification information used herein are exemplified for convenience of explanation. Accordingly, the present disclosure is not limited to terms described below, and other terms denoting objects having the same technical meanings may be used.

Hereinafter, a base station is an entity that allocates resources to a terminal and may be at least one of a gNode B, an eNode B, a node B, a base station (BS), a radio access unit, a BS controller, or a node on a network. The terminal may include a user equipment (UE), a mobile station (MS), a cellular phone, a smartphone, a computer, or a multimedia system capable of performing a communication function. In the present disclosure, a downlink (DL) denotes a wireless transmission path of a signal transmitted by a BS to a UE, and an uplink (UL) denotes a wireless transmission path of a signal transmitted by a UE to a BS. Although the following descriptions may be provided about long term evolution (LTE) or LTE-Advanced (LTE-A) systems as an example, embodiments of the present disclosure are also applicable to other communication systems having similar technical backgrounds or channel structure. For example, other communication systems to which an embodiment of the present disclosure may be applied may include 5G mobile communication technology (5^{th} generation (5G), new radio (NR), etc.) developed after LTE-A, and 5G below may be a concept including existing LTE, LTE-A, and other similar services. Also, the present disclosure may be applied to other communication systems through some modifications without departing from the scope of the present disclosure at the discretion of one of ordinary skill in the art. It will be understood that each block of flowchart illustrations and combinations of blocks in the flowchart illustrations may be implemented by computer program instructions.

Because these computer program instructions may be loaded into a processor of a general-purpose computer, special purpose computer, or other programmable data processing equipment, the instructions, which are executed via the processor of the computer or other programmable data processing equipment generate means for performing the functions specified in the flowchart block(s). Because these computer program instructions may also be stored in a computer-executable or computer-readable memory that may direct the computer or other programmable data processing equipment to function in a particular manner, the instructions stored in the computer- executable or computer-readable memory may produce an article of manufacture including instruction means for performing the functions stored in the flowchart block(s). Because the computer program instructions may also be loaded into a computer or other programmable data processing equipment, a series of operational steps may be performed on the computer or other programmable data processing equipment to produce a computer implemented process, and thus, the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in reverse order, according to the functionality involved. The term "unit", as used in embodiments, refers to a software or hardware component, such as field-programmable gate array (FPGA) or application-specific integrated circuit (ASIC), which may perform certain tasks. However, the term "... unit" does not mean to be limited to software or hardware. A "... unit" may be configured to be in an addressable storage medium or may be configured to operate one or more processors. Accordingly, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer components and "... units" or may be further separated into additional components and "... units". Furthermore, components and "... units" may be implemented to operate one or more central processing units (CPUs) in a device or a secure multimedia card. Also, a "... unit" in an embodiment may include one or more processors.

For convenience of explanation, the present disclosure use terms and names defined in the 5GS and NR standards defined by the 3^{rd} generation partnership project (3GPP). However, the present disclosure is not limited by such terms and names, and may be equally applied to wireless communication systems conforming to other standards. For example, the present disclosure may be applied to 3GPP 5GS/NR (5G mobile communication standard).

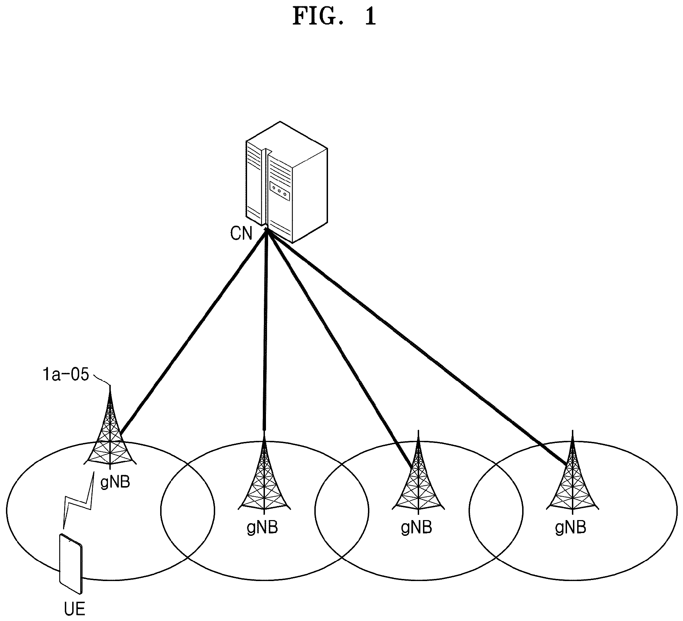

FIG. 1 is a diagram illustrating a structure of an NR system, according to an embodiment of the present disclosure.

Referring to FIG. 1, a radio access network of an NR system may include a next-generation BS (gNode B, hereinafter referred to as gNB, Node B, or base station (BS)) and a core network (CN). A user equipment (UE) or a terminal may access an external network through the gNB and the CN.

In FIG. 1, the gNB corresponds to an existing node B of a universal mobile telecommunications system (UMTS) or an existing enhanced node B (ENB) of an LTE system. The gNB is connected to the UE through a wireless channel and performs more complex functions than the existing ENB. In the NR system, all user traffic data including real-time services such as voice over Internet protocol (VoIP) may be serviced through shared channels, and thus an entity for performing scheduling by collecting state information, e.g., buffer state information, available transmission power state information, and channel state information, of UEs is required and the gNB operates as such an entity. One gNB typically controls a plurality of cells. For example, the NR system uses radio access technology such as orthogonal frequency division multiplexing (OFDM) at a bandwidth of 20 MHz to achieve a data rate of 100 Mbps. Furthermore, adaptive modulation & coding (AMC) is applied to determine a modulation scheme and a channel coding rate in accordance with a channel state of the UE.

The NR CN performs functions such as mobility support, bearer configuration, and quality of service (QoS) configuration. The CN is a device for performing a mobility management function and various control functions on the UE and may be connected to a plurality of BSs. The next-generation mobile communication system may cooperate with the existing LTE system, and the CN may be connected to a mobility management entity (MME) through a network interface. The MME may also be connected to an eNB that is an existing BS.

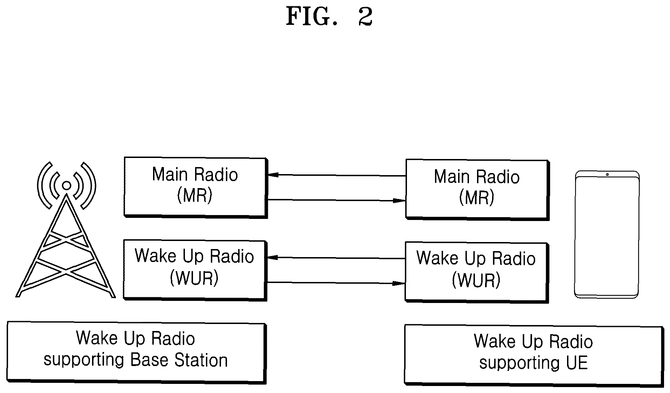

FIG. 2 is a diagram for describing the concept of a network energy saving (NES) mode of a BS or a cell, according to an embodiment of the present disclosure.

Referring to FIG. 2, when a BS supporting a wake up radio (WUR) function is referred to as a WUR BS and a UE supporting a WUR function is referred to as a WUR UE, the WUR BS may include a main radio (MR) for performing wireless communication with the WUR UE and a WUR for performing a wake-up operation, and the WUR UE may include an MR for performing wireless communication with the WUR BS and a WUR for performing a wake-up operation. In this case, the MR of the WUR BS may perform wireless communication with the MR of the WUR UE or another UE, and the WUR of the WUR BS may perform wireless communication with the WUR of the WUR UE.

In an embodiment, the WUR may be a part of the MR, and the WUR and the MR may be a single physical module, not two separate modules, with the WUR being logically distinct.

In an embodiment, the WUR may be a part of the MR both physically and logically.

The WUR BS and the WUR UE may have the following operational states.
1. Full On state where both the MR and the WUR are turned on
2. MR On state where only the MR is turned on and the WUR is turned off
3. Deep Sleep state where the MR is turned off and only the WUR is turned on
4. Full Off state where both the MR and the WUR are turned off

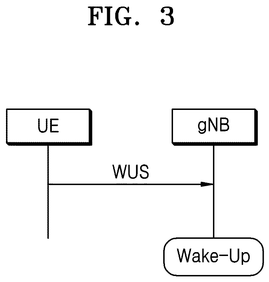

FIG. 3 illustrates a procedure in which a UE transmits a wake up signal (WUS) to a BS and the BS receiving the WUS wakes up from a sleep mode, according to an embodiment of the present disclosure.

Referring to FIG. 3, a WUR UE transmits a WUS to a WUR BS operating in a Deep Sleep state, and the WUR BS receives the WUS.

In this case, the WUS may be received through a WUR receiver of the WUR BS.

The BS receiving the WUS wakes up from the Deep Sleep state and transitions to an MR On state or a Full On state.

In this case, a WUR may be a part of an MR, and the WUR and the MR may be a single physical module, not two separate modules, with the WUR being logically distinct.

In an embodiment, the WUR may be a part of the MR both physically and logically.

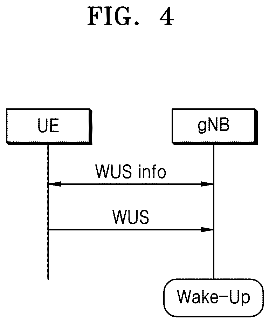

FIG. 4 illustrates a procedure in which a UE transmits a WUS based on information configured by a BS and the BS receiving the WUS wakes up from a sleep mode, according to an embodiment of the present disclosure.

Referring to FIG. 4, a BS may transmit a signal to a UE so that the UE transmits a WUS. In more detail, the BS may transmit a signal including all or part of WUS resource information as follows to the UE.
- resource information such as any time/frequency at which the WUS may be transmitted,
- resource information including, for example, subframe/ radioframe/ slot time information with a periodically repeating rule
- resource information including, for example, a WUS transmission time duration expressed in absolute time, number of slots, or number of frames
- resource information including, for example, an interval until a start time for indicating a certain start time at which transmission is allowed after receiving the signal, expressed in absolute time, number of slots, number of frames, or timer
- resource information including, for example, a frequency band ID indicating a certain frequency band,
- resource information including, for example, a resource block ID indicating a start frequency, a bandwidth indicating a frequency bandwidth, and the number of unit resource block frequency bandwidths
- resource information including, for example, a reference frequency ID indicating a start frequency from a certain reference frequency, a bandwidth indicating a difference between the reference frequency and the start frequency, and the number of unit resource block frequency bandwidths
- a sequence ID or a list of sequence IDs that may designate a sequence transmittable as the WUS
- an information ID or a list of information IDs indicating a type of information transmittable as the WUS
- a condition ID or a list of condition IDs indicting a type of condition under which the WUS is transmittable
- an indication that the UE may transmit the WUS when the BS is operating in a Deep Sleep mode
- the information may be information of the BS transmitting the signal
- the information may be information of a neighboring BS (or cell) of the BS transmitting the signal, and in this case, a BS ID, a cell ID, a BS ID list, or a cell ID list may be included.
- the information may be applied to one or more BSs or cells, and in this case, a BS ID list or cell ID list that may use the corresponding WUS transmission information may be included.
- the information may be equally applied to all neighboring BSs or cells (cell common information), and in this case, an indicator (e.g., a 1-bit indication) notifying the fact to the UE may be included.
- the information may have a structure and format similar or identical to physical random access channel (PRACH) configuration information.

The signal may be included in a broadcast signal transmitted from the BS to the UE, for example, a master information block (MIB) within an SSB or a system information block (SIB).

The signal may be included in a unicast signal transmitted from the BS to a specific UE, for example, an RRC signal, a MAC signal, or a PHY signal.

A WUR UE may transmit a WUS to a WUR BS operating in a Deep Sleep state, and the WUR BS may receive the WUS.

In this case, the WUS may be received through a WUR receiver of the WUR BS.

The BS receiving the WUS wakes up from the Deep Sleep state and transitions to an MR On state or a Full On state.

In an embodiment, a WUR may be a part of an MR, and the WUR and the MR may be a single physical module, not two separate modules, with the WUR being logically distinct.

In an embodiment, the WUR may be a part of the MR both physically and logically.

In the above scenarios, the UE may be an idle UE operating in an IDLE/Inactive mode, or may be a UE operating in a Connected mode by being connected to another gNB.

When the UE is operating the Connected mode, the WUS info may be received from the gNB to which the UE is connected through a broadcast signal (MIB or SIB) or a unicast signal (RRC signal, MAC-CE, or PHY signal) and may be used to transmit the WUS to another neighboring BS.

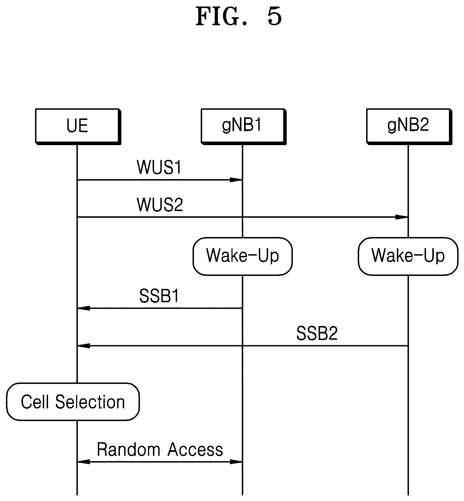

FIG. 5 illustrates a procedure in which a UE transmits a WUS to a plurality of BSs, the BSs receiving the WUS wake up from a sleep mode and then transmit an SSB to the UE, and the UE performs cell section and connection, according to an embodiment of the present disclosure.

Referring to FIG. 5, a WUR UE may transmit a WUS to WUR BSs operating in a Deep Sleep mode, and the WUR BSs may receive the WUS.

In this case, the WUS may be received through a WUR receiver of each WUR BS.

The BSs receiving the WUS wake from the Deep Sleep state and transition to an MR On state or a Full On state.

The BSs waking up from the Deep Sleep state and transitioning to the MR On state may transmit SSBs through MRs.

The UE receiving the SSBs may select an optimal BS/cell and may perform random access.

Next, the UE may connect to the corresponding cell and may perform wireless data communication according to a random access procedure.

In an embodiment, the WUR may be a part of the MR, and the WUR and the MR may be a single physical module, not two separate modules, with the WUR being logically distinct.

In an embodiment, the WUR may be a part of the MR both physically and logically.

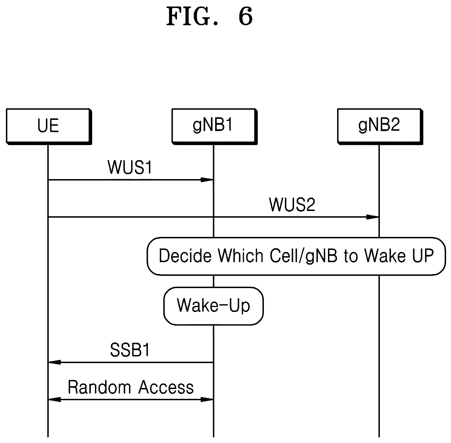

FIG. 6 illustrates a procedure in which a UE transmits a WUS to a plurality of BSs, some of the BSs receiving the WUS wake up from a sleep mode, and the UE performs cell selection and connection, according to an embodiment of the present disclosure.

Referring to FIG. 6, a WUR UE may transmit a WUS to WUR BSs operating in a Deep Sleep state, and the WUR BSs may receive the WUS.

In this case, the WUS may be received through a WUR receiver of each WUR BS.

The BSs receiving the WUS perform an operation of determining and identifying which BS will wake up.

Operations that may be considered are as follows.

The BSs may determine and identify whether to wake up based on their own criteria, for example, by comparing a threshold value with received signal quality (RSRP, RSRQ, CQI, etc.).

The BSs may transmit received WUS information to a higher-level entity that manages the BSs, for example, a distributed unit (DU) or a central unit (CU), by wire or wirelessly, and the higher-level entity may compare the received signal quality of each BS and may determine and identify which BS will wake up based on the comparison.

The higher-level entity may allow only one BS with the best quality to wake up.

The higher-level entity may compare a certain threshold value with the received signal quality and may accordingly determine and identify which BS will wake up.

The BSs may designate one BS as a decision-making entity, the other BSs may transmit the received WUS information to the decision-making BS by wire or wirelessly, and the decision-making BS may compare the received signal quality of each BS and may determine and identify which BS will wake up based on the comparison. In this case, the decision-making BS may transmit, by wire or wirelessly, information instructing the BSs that are to wake up to wake up.

The decision-making BS may allow only one BS with the best quality to wake up.

The decision-making BS may compare the received signal quality with a certain threshold value and may determine and identify which BS will wake up based on the comparison.

The threshold value may be a threshold value set by a network operator or a network manager.

The threshold value may be a threshold value determined within a range defined by a standard.

The BS or BSs that are to wake up according to the above decision may wake up from the Deep Sleep state and may transition to an MR On state or a Full On state.

The BSs waking up from the Deep Sleep state and transitioning to the MR On state may transmit SSBs through MRs.

The UE receiving the SSBs may select an optimal BS/cell and may perform random access.

Next, the UE may connect to the corresponding cell and may perform wireless data communication according to a random access procedure.

In an embodiment, the WUR may be a part of the MR, and the WUR and the MR may be a single physical module, not two separate modules, with the WUR being logically distinct.

In an embodiment, the WUR may be a part of the MR both physically and logically.

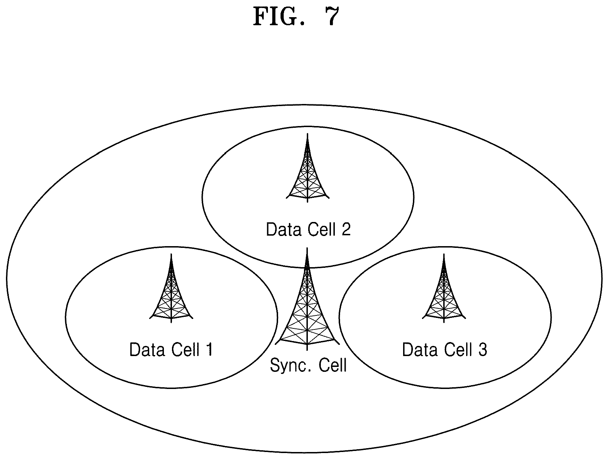

FIG. 7 illustrates an environment in which a synchronization cell and data cells coexist, according to an embodiment of the present disclosure.

The synchronization cell is a cell for managing synchronization and mobility of a UE, and may have the following characteristics:
- low power, low bandwidth, low capability
- Covers large area
- Possibly support mobility management
- Possibly support paging idle UEs
- Always On

The data cells are cells for transmitting and receiving information to and from the UE, and may have the following characteristics:
- High power, higher bandwidth, high capability
- Deep Sleep mode support

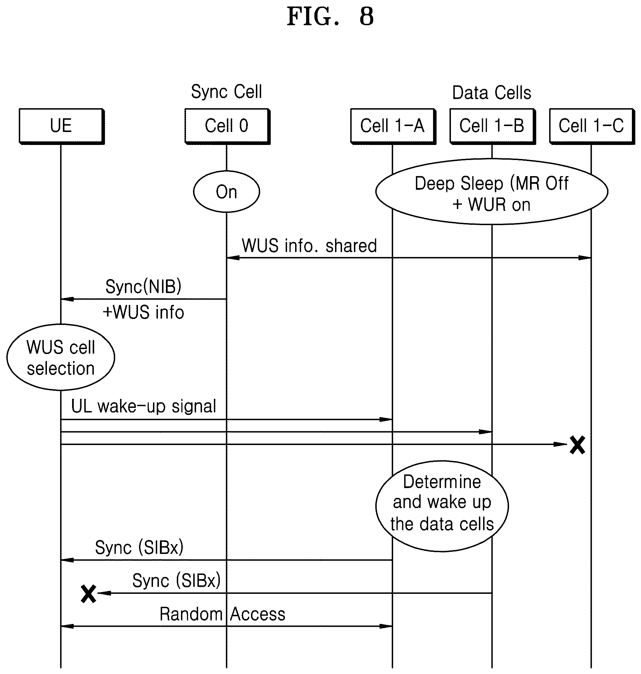

FIG. 8 illustrates an example of an initial access procedure of a UE, according to an embodiment of the present disclosure.

Referring to FIG. 8, a synchronization cell (hereinafter, referred to as a sync cell) is always awake and provides information to UEs within a coverage radius. A data cell (hereinafter, referred to as data cell) always operates in a Deep Sleep mode, and after receiving a WUS from a UE through a WUR, the data cell may wake up and enter an MR On state according to certain determination criteria.

The sync cell may identify how a plurality of data cells, whose coverage areas overlap within its coverage, may receive WUSs using WURs through which resources (time and frequency) and in what manner (periodically, aperiodically, etc.), and may share this information received from the data cells.

The sync cell may include WUS resource information received from the data cells in a broadcast signal, such as a synchronization signal (PSS or SSS), a master information block (MIB) included in an SSB, or a system information block (SIB) and may transmit the broadcast signal to an unspecified number of UEs. The WUS resource information may include all or part of the WUS resource information described with reference to FIG. 4. In FIG. 8, a necessary information block (NIB) may include the MIB or the SIB.

Also, the sync cell may share the WUS resource information of each data cell with the UE, and when downlink resource synchronization of any of the data cells is different from that of the sync cell, the sync cell may include this synchronization difference between cells in the signal transmitted to the UE and may transmit the signal. Using this information, the UE may determine synchronizations of different data cells and may determine corresponding WUS resource locations.

When downlink resource synchronization of a given data cell is not different from that of the sync cell, the sync cell may implicitly indicate this to the UE by not providing information about the synchronization difference between the data cell and the sync cell. Alternatively, the sync cell may directly include, in the signal, an indicator indicating that synchronization of each data cell is the same as that of the sync cell. The indicator may be a 1-bit indicator indicating that synchronizations of all data cells are the same as that of the sync cell, or may be a 1-bit indicator included in the WUS resource information of each data cell indicating that synchronization of each data cell is the same as that of the sync cell.

Also, the sync cell may include location information of each data cell in the signal and may transmit the signal to the UE, for the UE's access determination.

Also, the sync cell may include, in the signal, a list of services that each data cell may or may not support and may transmit the signal to the UE for the UE's access determination.

The UE may select cells to which the UE will transmit a WUS, based on the information received from the sync cell.

For example, the UE may compare a location of the UE with locations of the data cells and then identify to transmit a WUS to a nearest data cell or to K data cells in order of proximity. The value K may be included in the signal including the information about the data cells transmitted by the BS.

For example, the UE may identify to transmit a WUS to a data cell with WUS resources that may be transmitted most quickly or to K data cells in order of temporal proximity. The value K may be included in the signal including the information about the data cells transmitted by the BS.

For example, based on records of previously received signals, such as synchronization signals, from each data cell, the UE may identify to transmit a WUS to a data cell predicted to have the best received signal performance (e.g., RSRP, RSRQ, CQI, SNR, or SINR) or to K data cells in order of predicted best performance. The value K may be included in the signal including the information about the data cells transmitted by the BS.

Next, the UE transmits a WUS to the selected data cells.

When the WUS is a single signal with one sequence that may be simultaneously received by different data cells and transmitted by using the same resources, the UE may transmit one WUS so that one or more data cells receive the WUS simultaneously.

In this case, the WUS may be received through a WUR receiver of the WUR BS.

The data cell BSs receiving the WUS may perform an operation of determining and identifying which BSs will wake up. The decision operation may be one of the operations described with reference to FIG. 6.

The data cells that have woken up may perform general radio communication cell operations such as transmitting an SSB and supporting UE connection.

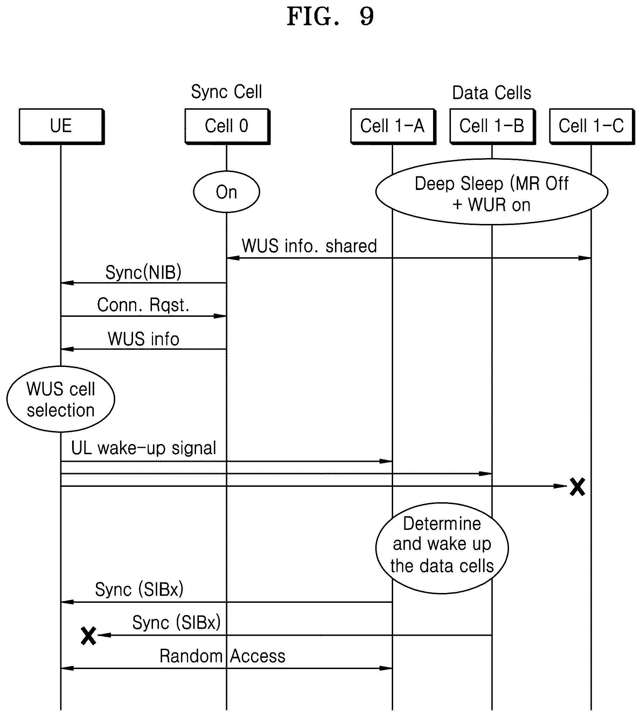

FIG. 9 illustrates an example of an initial access procedure of a UE, according to an embodiment of the present disclosure.

Referring to FIG. 9, a synchronization cell (hereinafter, referred to as a sync cell) is always awake and may provide information to UEs within a coverage radius. A data cell (hereinafter, referred to as a data cell) always operates in a Deep Sleep mode, and after receiving a WUS from a UE through a WUR, the data cell may wake up and enter an MR On state according to certain determination criteria.

The sync cell may identify how a plurality of data cells, whose coverage areas overlap within its coverage, may receive WUSs using WURs through which resources (time and frequency) and in what manner (periodically, aperiodically, etc.), and may share this information received from the data cells.

The sync cell may transmit a synchronization signal (PSS or SSS), a master information block (MIB) included in the SSB, or a system information block (SIB), and may transmit, to an unspecified number of UEs, the information including access request signal resource information that allows the UE to transmit an access request signal. In FIG. 9, a necessary information block (NIB) may include the MIB or the SIB.

The access request signal resource information may include at least one of the following.
resource information such as any time/frequency at which the access request signal may be transmitted,
resource information including, for example, subframe/ radioframe/ slot time information with a periodically repeating rule
resource information including, for example, an access request signal transmission time duration expressed in absolute time, number of slots, or number of frames
resource information including, for example, an interval until a start time for indicating a certain start time at which transmission is allowed after receiving the signal, expressed in absolute time, number of slots, number of frames, or timer
resource information including, for example, a frequency band ID indicating a frequency band,
resource information including, for example, a resource block ID indicating a start frequency, a bandwidth indicating a frequency bandwidth, and the number of unit resource block frequency bandwidths
resource information including, for example, a reference frequency ID indicating a start frequency from a certain reference frequency, a bandwidth indicating a difference between the reference frequency and the start frequency, and the number of unit resource block frequency bandwidths
a sequence ID or a list of sequence IDs that may designate a sequence transmittable as the access request signal
an information ID or a list of information IDs indicating a type of information transmittable as the access request signal
a condition ID or a list of condition IDs indicting a type of condition under which the access request signal is transmittable

The UE may transmit the access request signal to the sync cell through the access request signal resources received from the BS. The access request signal may be a signal that is the same as or similar to an existing random access preamble signal, and is capable of being transmitted and received even when uplink synchronization is not achieved. The access request signal may be any Zadoff Chu signal, which is characterized by good autocorrelation characteristics and may be transmitted by the UE to the BS even in a situation where uplink synchronization is not achieved. The access request signal may be a signal of a unique sequence number among existing random access preamble signals, and the sequence number may be information included in a broadcast signal (e.g., MIB or SIB) or a unicast signal (e.g., RRC or MAC) previously transmitted by the BS to the UE.

The sync cell receiving an access request may include the WUS resource information previously shared from the data cells in a response signal and transmit the response signal so that the UE having sent the access request receives the signal. The WUS resource information may include all or part of the WUS resource information described with reference to FIG. 4. The response signal may be a signal that is the same as or similar to a random access response (RAR) signal transmitted by the BS to the UE in response to a random access preamble. The response signal may be generated based on a specific rule related to a transmission and reception time of the access request signal, and may be packaged and encrypted so that only the UE having transmitted the access request signal receives and understands the signal.

Also, the sync cell may share the WUS resource information of each data cell with the UE, and when downlink resource synchronization of any of the data cells is different from that of the sync cell, the sync cell may include this synchronization difference between cells in the signal transmitted to the UE and may transmit the signal. Using this information, the UE may determine synchronizations of different data cells and may determine corresponding WUS resource locations.

When downlink resource synchronization of a given data cell is not different from that of the sync cell, the sync cell may implicitly indicate this to the UE by not providing information about the synchronization difference between the data cell and the sync cell. Alternatively, the sync cell may directly include, in the signal, an indicator indicating that synchronization of each data cell is the same as that of the sync cell. The indicator may be a 1-bit indicator indicating that synchronizations of all data cells are the same as that of the sync cell, or may be a 1-bit indicator included in the WUS resource information of each data cell indicating that synchronization of each data cell is the same as that of the sync cell.

Also, the sync cell may include location information of each data cell in the signal and may transmit the signal to the UE, for the UE's access determination.

Also, the sync cell may include, in the signal, a list of services that each data cell may or may not support and may transmit the signal to the UE for the UE's access determination.

The UE may select cells to which the UE will transmit a WUS, based on the information received from the sync cell.

For example, the UE may compare a location of the UE with locations of the data cells and then identify to transmit a WUS to a nearest data cell or K data cells in order of proximity. The value K may be included in the signal including the information about the data cells transmitted by the BS.

For example, the UE may identify to transmit a WUS to a data cell with WUS resources that may be transmitted most quickly or to K data cells in order of temporal proximity. The value K may be included in the signal including the information about the data cells transmitted by the BS.

For example, based on records of previously received signals, such as synchronization signals, from each data cell, the UE may identify to transmit a WUS to a data cell predicted to have the best received signal performance (e.g., RSRP, RSRQ, CQI, SNR, or SINR) or to K data cells in order of predicted best performance. The value K may be included in the signal including the information about the data cells transmitted by the BS.

Next, the UE transmits a WUS to the selected data cells.

When the WUS is a single signal with one sequence that may be simultaneously received by different data cells and transmitted by using the same resources, the UE may transmit one WUS so that one or more data cell receive the WUS simultaneously.

In this case, the WUS may be received through a WUR receiver of the WUR BS.

The data cell BSs receiving the WUS may perform an operation of determining and identifying which BSs will wake up. The decision operation may be one of the operations described with reference to FIG. 6.

The data cells that have woken up may perform general radio communication cell operations such as transmitting an SSB and supporting UE connection.

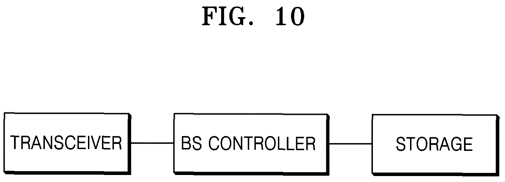

FIG. 10 is a diagram illustrating a structure of a BS, according to an embodiment of the present disclosure.

Referring to FIG. 10, a BS may include a transceiver, a controller, and a storage. The transceiver, the controller, and the storage may operate according to the communication method of the BS described above. Also, a network device m ay also correspond to the structure of the BS. However, components of the BS are not limited thereto. For example, the BS may include more or fewer components than those illustrated in FIG. 10. For example, the BS may include the transceiver and the controller. In addition, the transceiver, the controller, and the storage may be implemented as one chip.

The transceiver, which collectively refers to a receiver and a transmitter of the BS, may transmit and receive signals to a UE, another BS, or another network device. In this case, the transmitted and received signals may include control information and data. For example, the transceiver may transmit system information to the UE and may transmit a synchronization signal or a reference signal. To this end, the transceiver may include an RF transmitter for up-converting and amplifying a frequency of a transmitted signal and an RF receiver for low-noise amplifying and down-converting a frequency of a received signal. However, this is only an embodiment of the transceiver, and components of the transceiver are not limited to the RF transmitter and the RF receiver. The transceiver may include a wired/wireless transceiver, and may include various components for transmitting and receiving signals. Also, the transceiver may receive a signal through a communication channel (e.g., a wireless channel) and may output the signal to the controller, and may transmit a signal output from the controller through the communication channel. Also, the transceiver may receive a communication signal and may output the communication signal to a processor, and may transmit a signal output from the processor to the UE, another BS, or another entity through a wired/wireless network.

The storage may store programs and data required for an operation of the BS. Furthermore, the storage may store control information or data included in a signal obtained by the BS. The storage may include a storage medium such as ROM, RAM, hard disk, CD-ROM, and DVD, or any combination thereof. Also, the storage may store at least one of information transmitted and received through the transceiver and information generated through the controller.

In the present disclosure, the controller may be defined as a circuit, an application-specific integrated circuit, or at least one processor. The processor may include a communication processor (CP) for performing control for communication and an application processor (AP) for controlling an upper layer such as an application program. The controller may control an overall operation of the BS according to an embodiment of the present disclosure. For example, the controller may control a signal flow between the respective blocks to perform an operation according to the flowcharts described above.

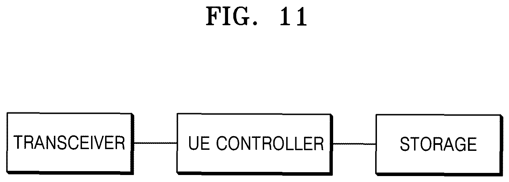

FIG. 11 is a diagram illustrating a structure of a UE, according to an embodiment of the present disclosure.

Referring to FIG. 11, a UE may include a transceiver, a controller, and a storage. The transceiver, the controller, and the storage may operate according to the communication method of the UE described above. However, components of the UE are not limited thereto. For example, the UE may include more or fewer components than those illustrated in FIG. 11. For example, the UE may include the transceiver and the controller. In addition, the transceiver, the controller, and the storage may be implemented as one chip.

The transceiver, which collectively refers to a receiver of the UE and a transmitter of the UE, may transmit and receive signals to and from a BS, another UE, or a network entity. The signals to be transmitted and received to and from the BS may include control information and data. For example, the transceiver may receive system information from the BS and may receive a synchronization signal or a reference signal. To this end, the transceiver may include an RF transmitter for up-converting and amplifying a frequency of a transmitted signal and an RF receiver for low-noise amplifying and down-converting a frequency of a received signal. However, this is only an embodiment of the transceiver, and components of the transceiver are not limited to the RF transmitter and the RF receiver. Also, the transceiver may include a wired/wireless transceiver, and may include various components for transmitting and receiving signals. In addition, the transceiver may receive a signal through a wireless channel and output the signal to the controller, or may transmit a signal output from the controller through the wireless channel. Also, the transceiver may receive a communication signal and may output the communication signal to a processor, and may transmit a signal output from the processor to a network entity through a wired/wireless network.

The storage may store programs and data required for an operation of the UE. Also, the memory may store control information or data included in a signal obtained by the UE. The storage may include a storage medium such as ROM, RAM, hard disk, CD-ROM, and DVD, or any combination thereof.

In the present disclosure, the controller may be defined as a circuit, an application-specific integrated circuit, or at least one processor. The processor may include a communication processor (CP) for performing control for communication and an application processor (AP) for controlling an upper layer such as an application program. The controller may control an overall operation of the UE according to an embodiment of the present disclosure. For example, the controller may control a signal flow between the respective blocks to perform an operation according to the flowcharts described above.

Methods according to the embodiments described in the specification or the claims of the present disclosure may be implemented by hardware, software, or a combination of hardware and software.

When the methods are implemented by software, a computer-readable storage medium storing one or more programs (software modules) may be provided. The one or more programs stored in the computer-readable storage medium are configured to be executed by one or more processors in an electronic device. The one or more programs include instructions for allowing the electronic device to execute the methods according to the embodiments described in the specification or the claims of the present disclosure.

The programs (e.g., software modules or software) may be stored in a random-access memory (RAM), a non-volatile memory including a flash memory, a read-only memory (ROM), an electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in a memory including any combination of some or all of the above storage media. Also, a plurality of constituent memories may be provided.

Also, the programs may be stored in an attachable storage device accessible through a communication network such as the Internet, an intranet, a local area network (LAN), a wide LAN (WLAN), or a storage area network (SAN), or a combination thereof. Such a storage device may access a device for performing an embodiment of the present disclosure through an external port. Also, a separate storage device on a communication network may access a device for performing an embodiment of the present disclosure.

In specific embodiments of the present disclosure described above, components included in the present disclosure are expressed in a singular or plural form according to the specific embodiments. However, the singular or plural form is appropriately selected for convenience of description and the present disclosure is not limited thereto, and an element expressed in a plural form may also be configured as a single element, and an element expressed in a singular form may also be configured as plural elements.

Although specific embodiments are described in the detailed description of the present disclosure, various modifications may be made without departing from the scope of the present disclosure. Thus, the scope of the present disclosure is not limited to the embodiments described herein and should be defined by the appended claims and their equivalents.

## Claims

1. An operating method of a user equipment (UE) in a wireless communication system, the operating method comprising:
obtaining, from a first cell, configuration information for a power saving mode operation of at least one neighboring cell;
transmitting, based on the configuration information, a signal comprising a wake-up indication to at least one of the at least one neighboring cell; and
performing random access (RA) to one of the neighboring cells to which the signal comprising the wake-up indication is transmitted.

2. The operating method of claim 1, wherein the configuration information is included in an information block comprising a synchronization signal.

3. The operating method of claim 1, further comprising:
receiving, from the first cell, an information block comprising a synchronization signal; and
transmitting an access request to the first cell,
wherein the configuration information is received in response to the access request.

4. The operating method of claim 1, further comprising receiving a
synchronization signal from at least one of the neighboring cells to which the signal comprising the wake-up indication is transmitted,
wherein the performing of the random access comprises performing random access to one of the neighboring cells transmitting the synchronization signal.

5. The operating method of claim 1, wherein the first cell is a synchronization cell, and the at least one neighboring cell is a data cell.

6. The operating method of claim 1, further comprising selecting, based on the configuration information, a cell from among the at least one neighboring cell to which the signal comprising the wake-up indication is to be transmitted.

7. The operating method of claim 1, wherein the configuration information comprises at least one of resource configuration information of a signal to be transmitted and received for the power saving mode operation, information about synchronization of the at least one neighboring cell, information about a location of the at least one neighboring cell, and information about a service supported by the at least one neighboring cell.

8. A user equipment (UE) operating in a wireless communication system, the UE comprising
a transceiver; and
at least one processor operatively coupled to the transceiver and configured to
obtain, from a first cell, configuration information for a power saving mode operation of at least one neighboring cell,
transmit, based on the configuration information, a signal comprising a wake-up indication to at least one of the at least one neighboring cell, and perform random access (RA) to one of the neighboring cells to which the signal comprising the wake-up indication is transmitted.

9. The UE of claim 8, wherein the configuration information is included in an information block comprising a synchronization signal.

10. The UE of claim 8, wherein the at least one processor is further configured to
receive, from the first cell, an information block comprising a synchronization signal,
transmit an access request to the first cell, and
receive the configuration information in response to the access request.

11. The UE of claim 8, wherein the at least one processor is further configured to
receive a synchronization signal from at least one of the neighboring cells to which the signal comprising the wake-up indication is transmitted, and perform random access to one of the neighboring cells from which the synchronization signal is received.

12. The UE of claim 8, wherein the first cell is a synchronization cell, and the at least one neighboring cell is a data cell.

13. The UE of claim 8, wherein the at least one processor is further configured to select, based on the configuration information, a cell from among the at least one neighboring cell to which the signal comprising the wake-up indication is to be transmitted.

14. The UE of claim 8, wherein the configuration information comprises at least one of resource configuration information of a signal to be transmitted and received for the power saving mode operation, information about synchronization of the at least one neighboring cell, information about a location of the at least one neighboring cell, and information about a service supported by the at least one neighboring cell.

15. A wireless communication system comprising:
a user equipment (UE);
a first cell; and
at least one neighboring cell,
wherein the first cell obtains configuration information for a power saving mode operation from the at least one neighboring cell and transmits the configuration information for the power saving mode operation of the at least one neighboring cell to the UE,
the UE transmits, based on the configuration information, a signal comprising a wake-up indication to at least one of the at least one neighboring cell,
at least one of the at least one neighboring cell receiving the wake-up indication transmits a synchronization signal to the UE, and
the UE performs random access to one of the neighboring cells transmitting the synchronization signal.
